# EUROPÄISCHE PATENTSCHRIFT

(11) **EP 1 031 308 B1**
(45) Veröffentlichungstag und Bekanntmachung des Hinweises auf die Patenterteilung: **20.11.2002**
(21) Anmeldenummer: 00103384.4
(22) Anmeldetag: 24.02.2000
(51) Int. Cl.: A47J 37/10

(54) **Spritzschutz für eine Bratpfanne**
Grease catching element for a baking pan
Ecran de protection contre les éclaboussures pour une poêle

(30) Priorität: 24.02.1999 DE 29903266 U
(43) Veröffentlichungstag der Anmeldung: 30.08.2000
(73) Patentinhaber: Langer, Jörg, Dr., 50968 Köln (DE)
(72) Erfinder: Langer, Jörg, Dr., 50968 Köln (DE)
(74) Vertreter: Schnekenbühl, Robert Matthias L.

(56) Entgegenhaltungen:
- DE-A- 2 915 274
- DE-A- 3 318 029
- US-A- 2 680 532
- US-A- 5 542 347
- US-A- 5 724 885

## Beschreibung

Nachdem beim Braten von Bratgut in einer Bratpfanne zwangsläufig Fettspritzer entstehen, die dafür sorgen, daß die Herdplatte und die umliegenden Flächen verschmutzt werden, wurden Versuche unternommen, dies durch Aufsätze zu verhindern bzw. zu reduzieren. Um zu vermeiden, daß für Bratpfannen unterschiedlicher Durchmesser jeweils einen anderen Aufsatz verwenden zu müssen, wurden in ihrem Durchmesser variable Aufsätze entwickelt.

Aus der DE 72 44 999 ist ein Bratpfannen-Aufsatz gegen Fettspritzer aus einem rostfreien Federstahlblech bekannt, an dem ein Griff angebracht ist. Der Durchmesser des Bratpfannen-Aufsatzes kann an unterschiedliche Bratpfannen angepaßt werden. Dazu weist das Federstahlblech auf seiner einen Fläche Haken und auf seiner anderen Fläche Ösen auf. An seiner Unterkante sind nach unten geöffnete Verbindungsstücke angebracht, die ein Aufsetzen des Bratpfannen-Aufsatzes auf eine Bratpfanne erlauben, indem sie den Rand der Bratpfanne umgreifen. Diese Vorrichtung ist zum einen aufwendig herzustellen und zum anderen nur auf gewisse Pfannendurchmesser einstellbar.

Des weiteren ist aus der WO 98/02074 ein Spritzschutz für eine Bratpfanne bekannt, der auch auf den Rand einer Bratpfanne aufgesetzt wird. Auch dieser Spritzschutz ist in seinem Durchmesser variabel, so daß er auf Bratpfannen unterschiedlicher Durchmesser aufgesetzt werden kann. Der Spritzschutz ist aus drei steifen oder flexiblen Teilen Wandteilen zusammengesetzt, die aus einem Blech gefertigt sind. Die einzelnen Wandteile sind über Ausnehmungen und Haken, die ineinander greifen, miteinander verbunden. Der Durchmesser wird dadurch variiert, daß ein Wandteil durch ein größeres oder kleineres ausgewechselt wird. Diese Vorrichtung ist sehr aufwendig in der Herstellung und es ist eine Vielzahl von unterschiedlich großen Teilen notwendig, um den Durchmesser an verschiedene Pfannen anzupassen.

Darüber hinaus ist aus der US 2,680,532 ein Spritzschutz gemäß dem Oberbegriff des Anspruchs 1 bekannt, der aus einem einzigen hufeisenförmigen Streifen aus flexiblem Material besteht. Bei dem flexiblen Material handelt es sich um ein stark absorbierendes Material, eine Folie oder ein ähnliche. Der Streifen kann zu einem kaminartigen Abzug mit zentraler Öffnung geformt werden. Dabei werden zwei, über seine innere Kante herausstehende Fortsätze ineinander verhakt. Durch ein weiteres Paar von Haken ist der Durchmesser des Abzugs variabel. Diese Abdeckung wird auf den Rand einer Pfanne und deren Pfannenstiel gelegt. Damit kann allerdings nur eine konische Form für den Spritzschutz erreicht werden, der nur für eine begrenzte Anzahl von Durchmessern von Pfannen geeignet ist.

Somit stellt sich die Aufgabe, einen preiswert herzustellenden Spritzschutz mit variablem Durchmesser zur Verfügung zu stellen, der rohrförmig ausbildbar ist.

Diese Aufgabe wird durch einen Spritzschutz für Bratpfannen mit den Merkmalen des Patentanspruchs 1 gelöst. Ein Spritzschutz aus einem feuerfesten Karton kann sehr preiswert hergestellt werden und ist gleichzeitig auch im Bereich hoher Temperaturen problemlos einsetzbar. Ein Auswechseln eines kaputten Spritzschutzes ist für den Benutzer wegen des geringen finanziellen Aufwandes auch nicht allzu schmerzlich. Durch die Verwendung eines biegsamen Kartons, kann dieser zu einer Röhre gebogen werden. Die Fixiervorrichtung auf der ersten Fläche des Kartons dient dazu, ihn in dieser Form zu halten. Der Karton kann unterschiedlich stark gebogen werden, so daß Röhren mit unterschiedlichen Durchmessern erzeugt werden können. Der so gebogenen Spritzschutz wird bei der Verwendung auf einer Bratpfanne angeordnet. Dadurch spritzt das Bratfett in der Bratpfanne nicht auf die Herdplatte und ihre Umgebung, sondern gegen die Innenfläche des Kartons. Insbesondere ist es vorteilhaft, wenn die erste Fläche bis auf den Bereich, in dem die erste Fixiervorrichtung angeordnet ist, mit einer fettabweisenden Schicht überzogen ist.

Eine vorteilhafte Weiterbildung der Erfindung sieht vor, daß der Spritzschutz auf seiner zweiten Fläche eine zweite Fixiervorrichtung aufweist, die durch Biegen des Kartons mit der ersten Fixiervorrichtung in Kontakt bringbar ist. Dadurch ist gewährleistet, daß der zu einer Röhre gebogenen Spritzschutz noch sicherer in seiner festgelegten Form verbleibt. Ein unbeabsichtigtes Lösen während der Verwendung des Spritzschutzes beim Braten mit einer Bratpfanne wird dadurch erschwert. Dies führt zu einer Reduzierung der Verletzungsgefahr durch heißes Fett.

Eine weitere vorteilhafte Weiterbildung der Erfindung sieht vor, daß die erste und/oder zweite Fixiervorrichtung im Bereich von Kanten des Kartons angeordnet sind. Dadurch ist es mit einem Karton vorgegebener Größe möglich, einen möglichst großen Durchmesser des Spritzschutzes zu erzielen. Außerdem ist eine große Variabilität hinsichtlich der zu erzielenden verschiedenen Durchmesser gegeben.

Besonders bevorzugt sind die erste und/oder zweite Fixiervorrichtung als ein Klebestreifen oder ein Klettverschluß ausgebildet. Dies ist eine besonders einfache und preiswerte Möglichkeit für Fixiervorrichtungen, die aber dennoch eine ausreichende Sicherheit gewährleistet, daß eine unbeabsichtigtes Lösen nicht stattfindet.

Eine weitere vorteilhafte Weiterbildung der Erfindung sieht vor, daß an einer ersten Kante eine Ausnehmung ausgebildet ist. Eine solche Weiterbildung ermöglicht es, den Spritzschutz auf die die Herdplatte umgebende Fläche zu stellen, so daß keine zusätzlichen Mittel vorgesehen sein müssen, mit denen er auf dem Rand einer Bratpfanne befestigbar ist. Der Spritzschutz kann so an einer Bratpfanne angeordnet werden, daß die Ausnehmung den Stiel aufnimmt, während der Körper der Bratpfanne vollständig vom Spritzschutz umfaßt ist. Durch die Möglichkeit, den Spritzschutz in seinem Durchmesser an den Durchmesser des Körpers der Bratpfanne anzupassen, ist es ausgeschlossen, daß zwischen Körper und Spritzschutz Fettspritzer auf den Herd gelangen. Dadurch ergibt sich eine Vorrichtung, die noch besser geeignet ist, den Herd vor Fettspritzern zu bewahren, als dies durch das Hineinstellen in den Körper der Bratpfanne oder das Aufsetzen auf den Rand der Bratpfanne gegeben ist.

Bevorzugt ist der Karton rechteckig ausgebildet, insbesondere weist er Kantenlängen von 115 cm und 25 cm auf. Ein rechteckiger Karton kann sehr einfach zu einer Röhre gebogen werden. Durch die Höhe von 25 cm im Verhältnis zum größtmöglichen Umfang von knapp unter 115 cm ist gewährleistet, daß ein Großteil der Fettspritzer an der inneren Fläche des Spritzschutzes hängen bleibt und somit die Verschmutzung der Herdplatte sehr gering gehalten wird. Zusätzlich ist es aber immer noch möglich, von oben in die Röhre einzugreifen und das Bratgut mit einem Hilfsmittel, beispielsweise einem Holzschaber, zu bearbeiten.

Die weiteren Vorteile und Einzelheiten der Erfindung werden anhand des in den Figuren dargestellten Ausführungsbeispiels im folgenden beschrieben. Es zeigen:
- Figur 1: eine Ansicht eines erfindungsgemäßen Spritzschutzes in seinem flachen Zustand und
- Figur 2: eine Ansicht des Spritzschutzes in seinem einsatzfähigen Zustand.

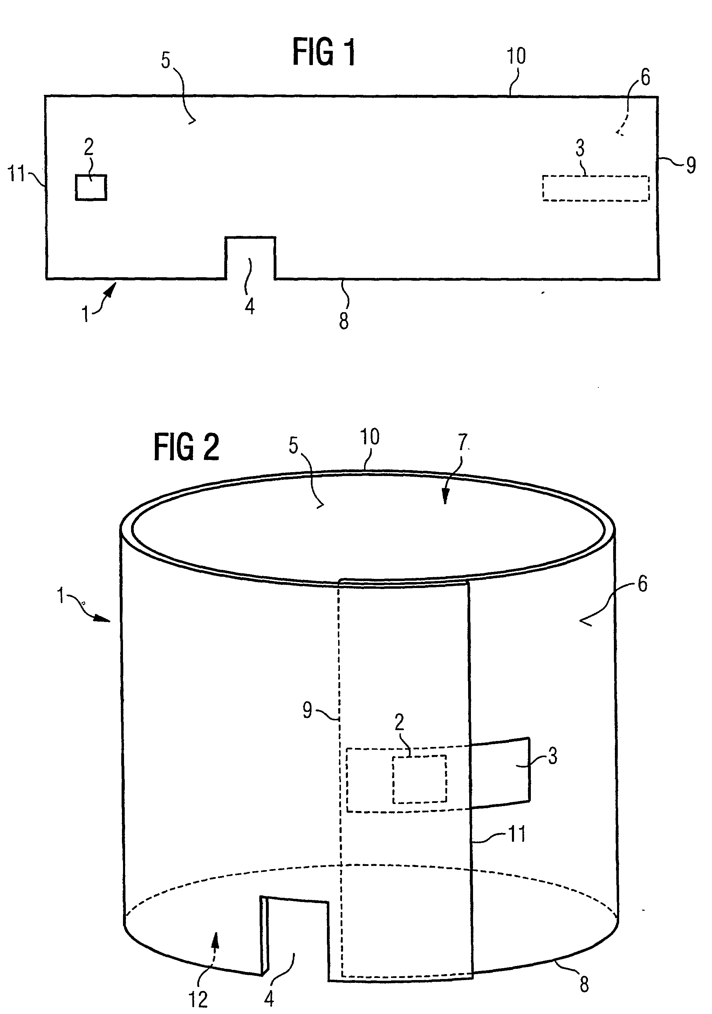

In Figur 1 ist ein Spritzschutz 1 in Form eines im wesentlichen rechteckigen, feuerfesten Kartons gezeigt. Er weist eine erste Fläche 5 und eine zweite Fläche 6 auf. Des weiteren wird er durch eine erste Kante 8, eine zweite Kante 9, eine dritte Kante 10 und eine vierte Kante 11 begrenzt. Auf der ersten Fläche 5 ist im Bereich der vierten Kante 11 eine erste Fixiervorrichtung 2 in Form eines Klebestreifens angeordnet. Auf der zweiten Fläche 6 ist im Bereich der zweiten Kante 9, die der vierten Kante 11 entgegengesetzt angeordnet ist, eine zweite Fixiervorrichtung 3 angeordnet. Die zweite Fixiervorrichtung 3 ist länglich und parallel zur ersten Kante 8 und zweiten Kante 10 ausgerichtet. Es handelt sich hierbei um ein Aufnahmefeld mit einer rauhen Oberfläche für den Klebestreifen der ersten Fixiervorrichtung 2. An der ersten Kante 8 ist eine rechteckförmige Ausnehmung 4 ausgebildet. Der Karton ist auf seiner ersten Fläche 5 bis auf den Bereich der ersten Fixiervorrichtung 2 mit einer fettabweisenden Schicht versehen.

In Figur 2 ist der Spritzschutz 1 in seiner einsatzbereiten Form dargestellt. Er ist zu einer Röhre gebogen, die eine obere Öffnung 7 und eine untere Öffnung 12 aufweist. Die untere Öffnung 12 wird von der ersten Kante 8 und die obere Öffnung 7 von der dritten Kante 10 begrenzt. Der Karton wird in seiner Röhrenform gehalten, indem der Klebestreifen der ersten Fixiervorrichtung 2 auf dem Aufnahmefeld der zweiten Fixiervorrichtung 3 klebt. Dadurch bildet die erste Fläche 5, die mit der fettabweisenden Schicht versehen ist, die Innenfläche der Röhre und die zweite Fläche 6 die Außenfläche. Der Durchmesser der Röhre ist dadurch einstellbar, daß die erste Fixiervorrichtung 2 an unterschiedlichen Stellen mit der zweiten Fixiervorrichtung 3 verbunden werden kann. Die zweite Kante 9 und die vierte Kante 11 sind bei unterschiedlichen Durchmessern unterschiedlich weit übereinander geschoben.

Der Spritzschutz 1 wird in dieser Form über eine auf einer Herdplatte befindlichen Bratpfanne geschoben (nicht gezeigt). Dies wird dadurch ermöglicht, daß der Stil der Bratpfanne in die Ausnehmung 4 eintaucht. Der Spritzschutz 1 steht dann mit seiner ersten Kante 8 auf der die Herdplatte umgebenden Fläche auf, wodurch eine gute Standfestigkeit erreicht wird. Über die obere Öffnung 7 kann auf das Bratgut in der Bratpfanne zugegriffen werden, so daß beispielsweise ein Anbrennen des Bratguts verhindert werden kann.

Es ist ebenso möglich, den Karton in einer anderen Form als rechteckig auszugestalten, beispielsweise trapezförmig. Dadurch sind kegelstumpfförmige Hüllflächen des Spritzschutzes 1 realisierbar. So kann der Schutz vor Spritzern nochmals effizienter gewährleistet werden. Bei der Verwendung eines Klebestreifens als erste Fixiervorrichtung 2, kann die zweite Fixiervorrichtung 3 auch weggelassen werden. Ebenfalls ist es möglich, die erste und zweite Fixiervorrichtung 2,3 als ein Klettverschluß auszuführen. Es versteht sich von selbst, daß der Spritzschutz 1 auch so gebogen werden kann, daß die erste Fläche 5 die äußere Fläche der Röhre bildet und die zweite Fläche 6 deren innere Fläche. Dann ist es vorteilhaft, die zweite Fläche 6 mit einer fettabweisenden Schicht zu versehen. Bei der ersten Fläche 5 ist dies dann nicht nötig.

Die Erfindung befaßt sich mit einem Spritzschutz für Bratpfannen. Zum Verhindern der Verschmutzung von Herdplatten und der umliegenden Flächen wird ein Spritzschutz über eine Bratpfanne gestellt, der aus einem feuerfesten, biegsamen Karton besteht, der auf seiner ersten Fläche eine erste Fixiervorrichtung aufweist. Dadurch ist er individuell auf verschiedene Bratpfannen einstellbar.

### Bezugszeichenliste

- 1: Spritzschutz
- 2: Erste Fixiervorrichtung
- 3: Zweite Fixiervorrichtung
- 4: Ausnehmung
- 5: Erste Fläche
- 6: Zweite Fläche
- 7: Obere Öffnung
- 8: Erste Kante
- 9: Zweite Kante
- 10: Dritte Kante
- 11: Vierte Kante
- 12: Untere Öffnung

## Patentansprüche

1. Spritzschutz (1) für Bratpfannen aus einem biegsamen Material, mit einer ersten Fläche (5) und einer zweiten Fläche (6) und mit einer ersten Fixiervorrichtung (2),
**dadurch gekennzeichnet,**
**daß** das biegsame Material ein feuerfester Karton ist und die erste Fixiervorrichtung (2) auf der ersten Fläche (5) des Spritzschutzes (1) angeordnet ist, so daß der Karton zu einer Röhre biegbar ist und durch die erste Fixiervorrichtung (2) in dieser Form fixierbar ist.

2. Spritzschutz (1) nach Anspruch 1, **dadurch gekennzeichnet, daß** er auf seiner zweiten Fläche (6) eine zweite Fixiervorrichtung (3) aufweist, die durch Biegen des Kartons mit der ersten Fixiervorrichtung (2) in Kontakt bringbar ist.

3. Spritzschutz (1) nach Anspruch 1 oder 2, **dadurch gekennzeichnet, daß** die erste und/oder zweite Fixiervorrichtung (2, 3) im Bereich von Kanten (9, 11) des Kartons angeordnet sind.

4. Spritzschutz (1) nach einem der vorstehenden Ansprüche, **dadurch gekennzeichnet, daß** die erste und/oder zweite Fixiervorrichtung (2, 3) ein Klebestreifen oder ein Klettverschluß sind.

5. Spritzschutz (1) nach einem der vorstehenden Ansprüche, **dadurch gekennzeichnet, daß** an einer ersten Kante (8) eine Ausnehmung (4) ausgebildet ist.

6. Spritzschutz (1) nach einem der vorstehenden Ansprüche, **dadurch gekennzeichnet, daß** der Karton rechteckig ist, insbesondere 115 cm auf 25 cm mißt.

## Claims

1. A splash guard (1) for frying pans, the splash guard being made of a flexible material and comprising a first surface (5) and a second surface (6) as well as a first fixing device (2),
wherein the flexible material is a fireproof cardboard and the first fixing device (2) is arranged on the first surface (5) of the splash guard (1) so the cardboard is able to be bent to form a tube and to be fixed in this form by the first fixing device (2).

2. The splash guard (1) as recited in Claim 1,
wherein it is provided on its second surface (6) with a second fixing device (3) which can be brought into contact with the first fixing device (2) by bending the cardboard.

3. The splash guard (1) as recited in Claim 1 or 2,
wherein the first and/or the second fixing device(s) (2, 3) is/are arranged in the region of edges (9, 11) of the cardboard.

4. The splash guard (1) as recited in one of the preceding claims,
wherein the first and/or the second fixing device(s) (2, 3) is/are an adhesive tape or a Velcro fastener.

5. The splash guard (1) as recited in one of the preceding claims,
wherein a cutout (4) is made in a first edge (8).

6. The splash guard (1) as recited in one of the preceding claims,
wherein the cardboard is rectangular, measuring, in particular, 115 cm by 25 cm.

## Revendications

1. Ecran de protection (1) contre les éclaboussures pour poêles, en matériau flexible, présentant une première face (5) et une seconde face (6) ainsi qu'un premier dispositif de fixation (2), **caractérisé en ce que** le matériau flexible est un carton réfractaire et **en ce que** le premier dispositif de fixation (2) est agencé sur la première face (5) de l'écran de protection (1), de façon que le carton puisse être roulé en tube et maintenu dans cette forme au moyen du premier dispositif de fixation (2).

2. Ecran de protection (1) selon la revendication 1, **caractérisé en ce qu'**il présente, sur sa seconde face (6), un second dispositif de fixation (3) apte à être mis au contact du premier dispositif de fixation (2) par cintrage du carton.

3. Ecran de protection (1) selon la revendication 1 ou 2, **caractérisé en ce que** le premier et/ou le second dispositif de fixation (2, 3) est(sont) agencé(s) au niveau des bords (9, 11) du carton.

4. Ecran de protection (1) selon l'une des revendications précédentes, **caractérisé en ce que** le premier et/ou le second dispositif de fixation (2, 3) consiste(nt) en une bande adhésive ou en une fermeture auto-agrippante.

5. Ecran de protection (1) selon l'une des revendications précédentes, **caractérisé en ce qu'**un évidement (4) est ménagé sur un premier bord (8).

6. Ecran de protection (1) selon l'une des revendications précédentes, **caractérisé en ce que** le carton est rectangulaire et mesure en particulier 115 cm sur 25 cm.
